# EUROPÄISCHE PATENTSCHRIFT

(11) **EP 1 045 234 B1**
(45) Veröffentlichungstag und Bekanntmachung des Hinweises auf die Patenterteilung: **27.10.2010**
(21) Anmeldenummer: 99107141.6
(22) Anmeldetag: 13.04.1999
(51) Int. Cl.: G01K 17/16

(54) **Verfahren zur Erfassung und Auswertung von temperaturabhängigen Verbrauchswerten**
Method for the acquisition and evaluation of temperature dependent consumption values
Méthode pour l'acquisition et l'exploration de valeurs de consommation qui dépendent de la température

(43) Veröffentlichungstag der Anmeldung: 18.10.2000
(73) Patentinhaber: ista International GmbH, 45131 Essen (DE)
(72) Erfinder: Mügge, Günter, Dr. Dipl.-Ing., 48159 Münster (DE)
(74) Vertreter: Stark, Walter

(56) Entgegenhaltungen:
- EP-A- 0 470 935
- DE-A- 3 513 580
- DE-A- 3 535 848

## Beschreibung

Die Erfindung betrifft ein Verfahren zur Erfassung und Auswertung von temperaturabhängigen Verbrauchswerten einer wenigstens aus einem Wärmetauscher und einer Fördereinrichtung für ein zu temperierendes Medium bestehenden Temperiereinrichtung, wobei der Wärmetauscher einerseits von einem Temperiermedium durchströmt wird und andererseits abhängig von der Förderleistung der Fördereinrichtung von dem zu temperierenden Medium durchsetzt wird oder ist.

Aus der Praxis sind verschiedene Verfahren zur Erfassung und Auswertung solcher Verbrauchswerte bekannt, wobei deren Einsatz von dem Aufbau der Temperiereinrichtung abhängig ist. Bei den üblicherweise als Heizkörpern eingesetzten reinen Konvektoren werden meist Erfassungsvorrichtungen in Form von Verdunstungsröhrchen oder elektronischen Heizkostenverteilern eingesetzt, da diese Temperiereinrichtungen ein definiertes, im Wesentlichen nicht durch äußere Einflüsse wesentlich veränderbares Wärmeabgabeverhalten aufweisen und insofern eine Bewertung der erfassten Verbrauchswerte problemlos und ohne großen Aufwand möglich ist.

Bei Temperiereinrichtungen, deren Wärmeabgabe bzw. Wärmeaufnahme und -abfuhr beeinflussbar ist, wie bei Fußbodenheizungen, z. B. durch aufliegende Teppiche oder bei Lüftungskonvektoren, auch als Klimatruhen bekannt, durch den Betriebszustand des Lüfters und die örtlichen Strömungsverhältnisse, werden üblicherweise den Durchfluss des Temperiermediums messende Einrichtungen verwendet. Dieses Verfahren ist aufgrund der zwangsläufigen Integration in den Temperierkreislauf sehr kostenintensiv.

Aufgabe der Erfindung ist es, ein Verfahren zur Erfassung und Auswertung von temperaturabhängigen Verbrauchswerten einer wenigstens aus einem Wärmetauscher und einer Fördereinrichtung für ein zu temperierendes Medium bestehenden Temperiereinrichtung, wobei der Wärmetauscher einerseits von einem Temperiermedium durchströmt wird und andererseits abhängig von der Förderleistung der Fördereinrichtung von dem zu temperierenden Medium durchsetzt wird oder ist, anzugeben, mit dem die Verbrauchswerte von Temperiereinrichtungen mit durch äußere Einflüsse beeinflussbaren Temperierverhalten einfach und kostengünstig erfasst werden können.

Diese Aufgabe wird bei einem derartigen Verfahren dadurch gelöst, dass durch die Bestimmung der mittleren Temperatur des Temperiermediums oder des zu temperierenden Mediums in der Temperiereinrichtung und durch die Bestimmung der Fördermenge der Fördereinrichtung die Verbrauchswerte erfasst werden. Hierdurch ist ein Eingriff in den Kreislauf des Temperiermediums nicht erforderlich und anstatt einer aufwendigen Durchflussmessung können die benötigten Werte durch einfache Sensoren bestimmt werden.

Vorteilhafterweise kann die Bestimmung der mittleren Temperatur des Temperiermediums oder des zu temperierenden Mediums durch Messung der jeweiligen Temperaturen vom Temperiermedium oder zu temperierenden Medium vor und nach der Temperiereinrichtung oder dem Wärmetauscher erfolgen, so dass die entsprechenden Messeinrichtungen gut zugänglich sind und bestehende Anlagen einfach nachgerüstet werden können.

Erfindungsgemäß kann die Bestimmung der Fördermenge der Fördereinrichtung mittels eines Anemometers erfolgen, wobei als Anemometer ein Flügelradanemometer, ein Hitzdrahtanemometer oder dergleichen verwendet werden kann.

Auch kann die Bestimmung der Fördermenge der Fördereinrichtung durch die Bestimmung der mittleren Temperaturen des Temperiermediums und des zu temperierenden Mediums in der Temperiereinrichtung erfolgen.

Hierbei kann vorzugsweise die Bestimmung der mittleren Temperaturen des Temperiermediums und des zu temperierenden Mediums durch Messung der Temperaturen des Temperiermediums und des zu temperierenden Mediums jeweils vor und nach der Temperiereinrichtung oder dem Wärmetauscher erfolgen, so dass die entsprechenden Messeinrichtungen gut zugänglich sind und bestehende Anlagen einfach nachgerüstet werden können.

Bei einer bevorzugten Ausprägung der Erfindung kann die Bestimmung der Fördermenge der Fördereinrichtung durch Erfassung des Betriebszustandes der Fördereinrichtung erfolgen, wobei die Erfassung des Betriebszustandes der Fördereinrichtung mittels opto-elektronischer oder magnetinduktiver Komponenten, insbesondere Sensoren erfolgen kann.

Auch kann die Erfassung des Betriebszustandes der Fördereinrichtung durch die Erfassung der momentanen elektrischen Betriebsdaten der Fördereinrichtung erfolgen, so dass ohne aufwendig zu installierende Messeinrichtungen und Sensoren eine Erfassung erzielbar ist. Hierbei kann z. B. aus der anliegenden Spannung und der Stromaufnahme eine Hilfsgröße als Drehzahläquivalent bestimmt werden; es kann die Schaltstellung bei Drehzahlvoreinstellung erfasst werden oder aber bei Antriebsregelung oder -steuerung das entsprechende Regel- oder Steuersignal berücksichtigt werden.

Vorteilhafterweise kann ein mit üblichen elektronischen Heizkostenverteilern kompatibles, dem ermittelten Verbrauchswert entsprechendes Signal generiert werden, so dass eine Integration in ein bestehendes Heiz- und/oder Kühlkostenerfassungs- und/oder -verteilsystem möglich ist.

Hierbei wird die Kompatibilität zum einen durch ein den üblichen Kodierungen, z. B. von Fernfühlergeräten entsprechend generiertes Signal erreicht, zum anderen ist auch der Zusammenhang zwischen Anzeige- und Verbrauchsfortschritt dementsprechend einzustellen.

Somit kann mittels des generierten Signals die Wärme- bzw. Kühlleistung durch bestehende Vorrichtungen miterfasst werden, und bei Einzelerfassung ist aufgrund der entsprechenden zugrundeliegenden Funktionalität eine einheitliche Auswertung des Messsignals möglich.

Die Erfindung betrifft weiterhin eine Vorrichtung zur Erfassung und Auswertung von temperaturabhängigen Verbrauchswerten einer wenigstens aus einem Wärmetauscher und einer Fördereinrichtung für ein zu temperierendes Medium bestehenden Temperiereinrichtung, wobei der Wärmetauscher einerseits von einem Temperiermedium durchströmt wird und andererseits abhängig von der Förderleistung der Fördereinrichtung von einem zu temperierenden Medium durchsetzt wird oder ist.

Aus der Praxis sind verschiedene derartige Vorrichtungen bekannt, deren Einsatz im Wesentlichen davon abhängt, ob die Temperiereinrichtung nutzerseitig beeinflussbar ist.

Bei nicht beeinflussbaren Temperiereinrichtungen wie z. B. normalen Konvektoren, werden Verdunster oder elektronische Heizkostenverteiler zur Verbrauchserfassung eingesetzt. Bei beeinflussbaren Temperiereinrichtungen, wie z. B. Fußbodenheizungen oder Lüftungskonvektoren, können derartige Vorrichtungen nicht eingesetzt werden, da sie das Abgabeverhalten nicht berücksichtigen und insofern keine genaue Erfassung zulassen.

Aufgabe der Erfindung ist es weiterhin, eine Vorrichtung zur Erfassung und Auswertung von temperaturabhängigen Verbrauchswerten einer wenigstens aus einem Wärmetauscher und einer Fördereinrichtung für ein zu temperierendes Medium bestehenden Temperiereinrichtung, wobei der Wärmetauscher einerseits von dem Temperiermedium durchströmt wird und andererseits abhängig von der Förderleistung der Fördereinrichtung von dem zu temperierenden Medium durchsetzt wird oder ist, anzugeben, mit der eine genaue Erfassung der Verbrauchswerte bei beeinflussbaren Temperiereinrichtungen möglich ist.

Diese Aufgabe wird bei einer derartigen Vorrichtung dadurch gelöst, dass wenigstens ein Sensor zur Bestimmung der mittleren Temperatur des Temperiermediums oder des zu temperierenden Mediums in der Temperiereinrichtung sowie eine Einrichtung zur Bestimmung der Fördermenge der Fördereinrichtung vorgesehen sind. Hierdurch ist ein Eingriff in den Kreislauf des Temperiermediums nicht erforderlich und anstatt einer aufwendigen Durchflussmessung können die benötigten Werte durch einfache Sensoren bestimmt werden.

Vorteilhafterweise können zur Bestimmung der mittleren Temperatur des Temperiermediums oder des zu temperierenden Mediums Sensoren zur Messung der jeweiligen Temperaturen vom Temperiermedium oder vom zu temperierenden Medium vor und nach der Temperiereinrichtung oder dem Wärmetauscher vorgesehen sein, so dass die entsprechenden Messeinrichtungen gut zugänglich sind und bestehende Anlagen einfach nachgerüstet werden können.

Erfindungsgemäß kann zur Bestimmung der Fördermenge der Fördereinrichtung ein Anemometer vorgesehen sein, wobei als Anemometer ein Flügelradanemometer, ein Hitzdrahtanemometer oder dergleichen vorgesehen sein kann.

Auch können zur Bestimmung der Fördermenge der Fördereinrichtung Sensoren zur Messung der mittleren Temperaturen des Temperiermediums und des zu temperierenden Mediums jeweils in der Temperiereinrichtung vorgesehen sein.

Auch können zur Bestimmung der mittleren Temperaturen des Temperiermediums und des zu temperierenden Mediums Sensoren zur Messung der Temperaturen des Temperiermediums und des zu temperierenden Mediums jeweils vor und nach der Temperiereinrichtung oder dem Wärmetauscher vorgesehen sein, so dass die entsprechenden Messeinrichtungen gut zugänglich sind und bestehende Anlagen einfach nachgerüstet werden können.

Bei einem bevorzugten Ausführungsbeispiel der Erfindung kann zur Bestimmung der Fördermenge der Fördereinrichtung eine Einrichtung zur Erfassung des Betriebszustandes der Fördereinrichtung vorgesehen sein, wobei zur Erfassung des Betriebszustandes der Fördereinrichtung opto-elektronische oder magnet-induktive Komponenten, insbesondere Sensoren vorgesehen sein können.

Auch kann zur Erfassung des Betriebszustandes der Fördereinrichtung eine die momentanen elektrischen Betriebsdaten der Fördereinrichtung erfassende Auswerteeinrichtung vorgesehen sein, so dass ohne aufwendig zu installierende Messeinrichtungen und Sensoren eine Erfassung erzielbar ist. Hierbei kann z. B. aus der anliegenden Spannung und der Stromaufnahme eine Hilfsgröße als Drehzahläquivalent bestimmt werden; es kann die Schaltstellung bei Drehzahlvoreinstellung erfasst werden oder aber bei Antriebsregelung oder -steuerung des entsprechende Regel- oder Steuersignal berücksichtigt werden.

Vorzugsweise kann eine ein mit üblichen elektronischen Heizkostenverteilern kompatibles und dem ermittelten Verbrauchswert entsprechendes Signal generierende und eine Ausgabeeinrichtung enthaltende Umwandeleinrichtung vorgesehen sein, so dass eine Integration in ein bestehendes Heiz- und/oder Kühlkostenerfassungs- und/oder -verteilsystem möglich ist.

Übliche elektronische Heizkostenverteiler können hierbei z. B. Mehrfach-Heizkostenverteiler mit Fernfühlern sein, wobei das generierte Signal anstatt eines Fernfühlersignals eingespeist wird. Dabei wird die Kompatibilität einerseits durch entsprechend gleiche Kodierung des generierten Signals erreicht, andererseits ist auch die zugrundeliegende Funktionalität, d. h. Anzeigefortschritt in Relation zum Verbrauchsfortschritt, entsprechend.

Somit kann durch das generierte Signal die Wärmeleistung bzw. Kühlleistung durch bereits bestehende Vorrichtungen miterfasst werden, und auch bei Einzelerfassung wird die Auswertung durch die gleichen zugrundeliegenden Funktionalitäten vereinfacht, da alle Messsignale gleichermaßen ausgewertet werden können.

Im Folgenden werden in der Zeichnung dargestellte Ausführungsbeispiele der Erfindung erläutert. Es zeigen:
- Fig. 1: ein Ausführungsbeispiel einer erfindungsgemäßen Vorrichtung und
- Fig. 2: den Gegenstand nach Fig. 1 in einer in ein bestehendes Heizkostenverteilsystem integrierten Ausprägung.

In allen Figuren werden für gleiche bzw. gleichartige Teile die gleichen Bezugszeichen verwendet.

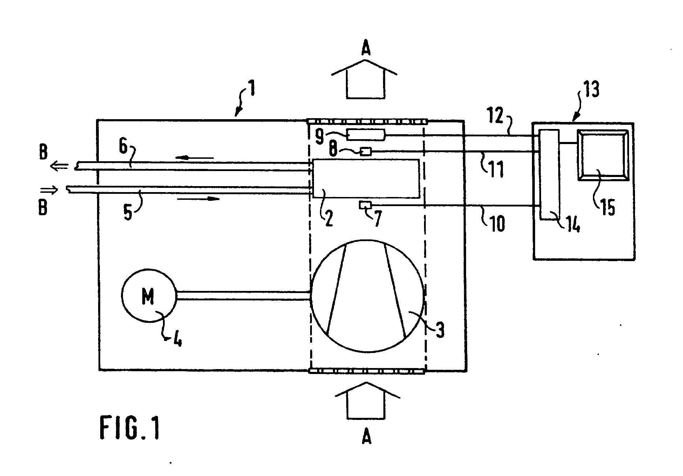

Fig. 1 zeigt eine Vorrichtung zur Erfassung und Auswertung von temperaturabhängigen Verbrauchswerten einer Temperiereinrichtung 1, welche einen Wärmetauscher 2 und eine Fördereinrichtung 3 für ein zu temperierendes Medium A, inbesondere Raumluft, aufweist.

Hierbei wird die Fördereinrichtung 3 von einem Motor 4 angetrieben und der Wärmetauscher 2 durch Leitungen 5, 6 von einem Temperiermedium B, insbesondere Wasser oder Kühlflüssigkeit, durchströmt.

Zur Erfassung der Verbrauchswerte sind im dargestellten Ausführungsbeispiel zwecks Bestimmung der mittleren Temperatur des zu temperierenden Mediums A Sensoren 7, 8 vor und nach dem Wärmetauscher 2 sowie ein Anemometer 9 vorgesehen, welche über Leitungen 10, 11, 12 mit einer in einer Umwandeleinrichtung 13 enthaltenen Ausgabeeinrichtung 14 verbunden sind. Die Messwerte sind dabei auf einer Anzeigeeinheit 15 dargestellt.

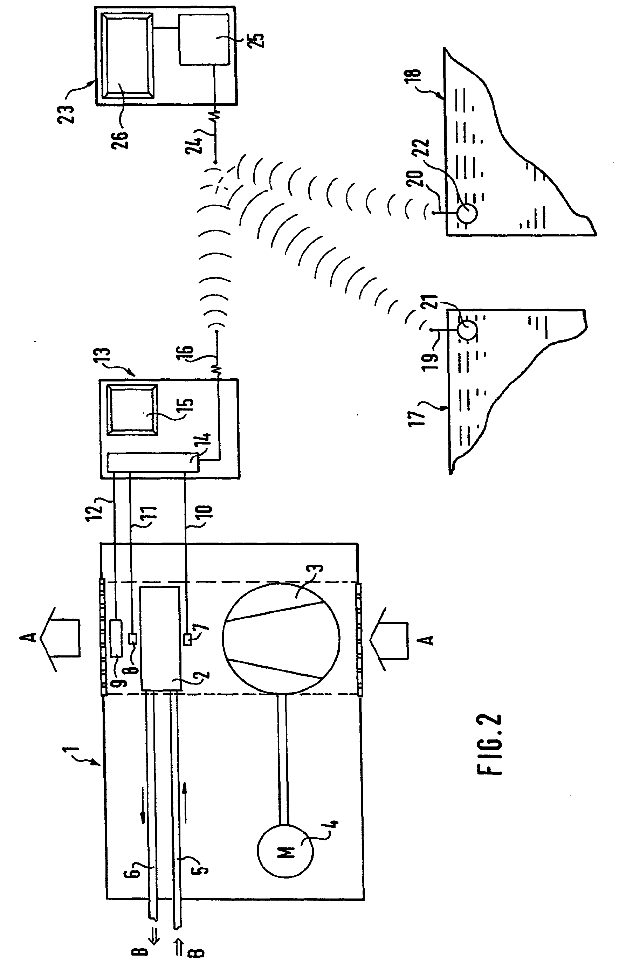

Fig. 2 zeigt eine entsprechende Vorrichtung in einer in ein bestehendes Heizkostenverteilsystem integrierten Ausprägung. Hierbei weist die Ausgabeeinrichtung 13 zur drahtlosen Datenübertragung eine Antenne 16 auf, mittels der sie - wie an Heizkörpern 17, 18 angeordnete und ebenfalls Antennen 19, 20 aufweisende Fernsensoren 21, 22 - die Messwerte an eine zentrale Auswerteeinrichtung 23 mit einer Antenne 24, einer Auswerteinrichtung 25 und einer Anzeigeeinheit 26 per Funk oder dergleichen überträgt.

Bei dieser Anwendung generiert die Umwandeleinrichtung 13 ein Messwert-Ausgabesignal, welches sowohl hinsichtlich Kodierung als auch in Bezug auf die zugrundeliegende Relation Messwertfortschritt/Anzeigefortschritt den Signalen der Fernsensoren 21, 22 entspricht und sendet es mittels der Ausgabeeinrichtung 14 über die Antenne 16 an die Antenne 24 der zentralen Auswerteeinrichtung 23.

## Patentansprüche

1. Verfahren zur Erfassung und Auswertung von temperaturabhängigen Verbrauchswerten einer wenigstens aus einem Wärmetauscher (2) und einer Fördereinrichtung (3) für ein zu temperierendes Medium A bestehenden Temperiereinrichtung (1), wobei der Wärmetauscher (2) einerseits von einem Temperiermedium B durchströmt wird und andererseits abhängig von der Förderleistung der Fördereinrichtung (3) von dem zu temperierenden Medium A durchsetzt wird oder ist, **dadurch gekennzeichnet, dass** durch die Bestimmung der mittleren Temperatur des Temperiermediums B oder des zu temperierenden Mediums A in der Temperiereinrichtung (1) und durch die Bestimmung der Fördermenge der Fördereinrichtung (3) die Verbrauchswerte erfasst werden.

2. Verfahren nach Anspruch 1, **dadurch gekennzeichnet, dass** die Bestimmung der mittleren Temperatur des Temperiermediums B oder des zu temperierenden Mediums A durch Messung der jeweiligen Temperaturen vom Temperiermedium B oder zu temperierenden Medium A vor und nach der Temperiereinrichtung (1) oder dem Wärmetauscher (2) erfolgt.

3. Verfahren nach Anspruch 1 oder 2, **dadurch gekennzeichnet, dass** die Bestimmung der Fördermenge der Fördereinrichtung (3) mittels eines Anemometers (9) erfolgt.

4. Verfahren nach Anspruch 3, **dadurch gekennzeichnet, dass** als Anemometer (9) ein Flügelradanemometer, ein Hitzdrahtanemometer oder dergleichen verwendet wird.

5. Verfahren nach Anspruch 1 oder 2, **dadurch gekennzeichnet, dass** die Bestimmung der Fördermenge der Fördereinrichtung (3) durch die Bestimmung der mittleren Temperaturen des Temperiermediums B und des zu temperierenden Mediums A in der Temperiereinrichtung (1) erfolgt.

6. Verfahren nach Anspruch 5, **dadurch gekennzeichnet, dass** die Bestimmung der mittleren Temperaturen des Temperiermediums B und des zu temperierenden Mediums A durch Messung der Temperaturen des Temperiermediums B und des zu temperierenden Mediums A jeweils vor und nach der Temperiereinrichtung (1) oder dem Wärmetauscher (2) erfolgt.

7. Verfahren nach Anspruch 1 oder 2, **dadurch gekennzeichnet, dass** die Bestimmung der Fördermenge der Fördereinrichtung (3) durch Erfassung des Betriebszustandes der Fördereinrichtung (3) erfolgt.

8. Verfahren nach Anspruch 7, **dadurch gekennzeichnet, dass** die Erfassung des Betriebszustandes der Fördereinrichtung (3) mittels opto-elektronischer oder magnet-induktiver Komponenten, insbesondere Sensoren erfolgt.

9. Verfahren nach Anspruch 7, **dadurch gekennzeichnet, dass** die Erfassung des Betriebszustandes der Fördereinrichtung (3) durch die Erfassung der momentanen elektrischen Betriebsdaten der Fördereinrichtung (3) erfolgt.

10. Verfahren nach einem der Ansprüche 1 bis 9, **dadurch gekennzeichnet, dass** ein mit üblichen elektronischen Heizkostenverteilern kompatibles, dem ermittelten Verbrauchswert entsprechendes Signal generiert wird.

11. Vorrichtung zur Erfassung und Auswertung von temperaturabhängigen Verbrauchswerten einer wenigstens aus einem Wärmetauscher (2) und einer Fördereinrichtung (3) für ein zu temperierendes Medium A bestehenden Temperiereinrichtung (1), wobei der Wärmetauscher (2) einerseits von einem Temperiermedium B durchströmt wird und andererseits abhängig von der Förderleistung der Fördereinrichtung (3) von dem zu temperierenden Medium A durchsetzt wird oder ist, insbesondere zur Durchführung des Verfahrens nach einem der Ansprüche 1 bis 10, **dadurch gekennzeichnet, dass** zur Erfassung der Verbrauchswerte wenigstens ein Sensor zur Bestimmung der mittleren Temperatur des Temperiermediums B oder des zu temperierenden Mediums A in der Temperiereinrichtung (1) sowie eine Einrichtung zur Bestimmung der Fördermenge der Fördereinrichtung (3) vorgesehen sind.

12. Vorrichtung nach Anspruch 11, **dadurch gekennzeichnet, dass** zur Bestimmung der mittleren Temperatur des Temperiermediums B oder des zu temperierenden Mediums A Sensoren zur Messung der jeweiligen Temperaturen vom Temperiermedium B oder vom zu temperierenden Medium A vor und nach der Temperiereinrichtung (1) oder dem Wärmetauscher (2) vorgesehen sind.

13. Vorrichtung nach Anspruch 11 oder 12, **dadurch gekennzeichnet, dass** zur Bestimmung der Fördermenge der Fördereinrichtung (3) ein Anemometer (9) vorgesehen ist.

14. Vorrichtung nach Anspruch 13, **dadurch gekennzeichnet, dass** als Anemometer (9) ein Flügelradanemometer, ein Hitzdrahtanemometer oder dergleichen vorgesehen ist.

15. Vorrichtung nach Anspruch 11 oder 12, **dadurch gekennzeichnet, dass** zur Bestimmung der Fördermenge der Fördereinrichtung (3) Sensoren zur Messung der mittleren Temperaturen des Temperiermediums B und des zu temperierenden Mediums A jeweils in der Temperiereinrichtung (1) vorgesehen sind.

16. Vorrichtung nach Anspruch 15, **dadurch gekennzeichnet, dass** zur Bestimmung der mittleren Temperaturen des Temperiermediums B und des zu temperierenden Mediums A Sensoren zur Messung der Temperaturen des Temperiermediums B und des zu temperierenden Mediums A jeweils vor und nach der Temperiereinrichtung (1) oder dem Wärmetauscher (2) vorgesehen sind.

17. Vorrichtung nach Anspruch 11 oder 12, **dadurch gekennzeichnet, dass** zur Bestimmung der Fördermenge der Fördereinrichtung (3) eine Einrichtung zur Erfassung des Betriebszustandes der Fördereinrichtung (3) vorgesehen ist.

18. Vorrichtung nach Anspruch 17, **dadurch gekennzeichnet, dass** zur Erfassung des Betriebszustandes der Fördereinrichtung (3) opto-elektronische oder magnet-induktive Komponenten, insbesondere Sensoren vorgesehen sind.

19. Vorrichtung nach Anspruch 17, **dadurch gekennzeichnet, dass** zur Erfassung des Betriebszustandes der Fördereinrichtung (3) eine die momentanen elektrischen Betriebsdaten der Fördereinrichtung (3) erfassende Auswerteeinrichtung vorgesehen ist.

20. Vorrichtung nach einem der Ansprüche 11 bis 19, **dadurch gekennzeichnet, dass** eine ein mit üblichen elektronischen Heizkostenverteilern kompatibles und dem ermittelten Verbrauchswert entsprechendes Signal generierende und eine Ausgabeeinrichtung (14) enthaltende Umwandeleinrichtung (13) vorgesehen ist.

## Claims

1. Method for acquiring and evaluating temperature-dependent consumption values of a tempering device (1) that includes at least one heat exchanger (2) and one conveying device (3) for a medium A to be tempered, wherein the heat exchanger (2) is traversed, on one hand, by a tempering medium B and, on the other hand, as a function of the conveying output of the conveying device (3), becomes penetrated or is penetrated by the medium A to be tempered, **characterized in that** the consumption values are acquired by determining the mean temperature of the tempering medium B or of the medium A to be tempered in the tempering device (1) and by determining the conveyed amount of the conveying device (3).

2. Method according to Claim 1, **characterized in that** the determining of the mean temperature of the tempering medium B or of the medium A to be tempered by measuring the respective temperatures of the tempering medium B or of the medium A to be tempered is effected upstream and downstream of the tempering device (1) or the heat exchanger (2).

3. Method according to Claim 1 or 2, **characterized in that** the determining of the conveyed amount of the conveying device (3) is effected by means of an anemometer (9).

4. Method according to Claim 3, **characterized in that** a hydrometric vane, a hot-wire anemometer or the like is used as an anemometer (9).

5. Method according to Claim 1 or 2, **characterized in that** the determining of the conveyed amount of the conveying device (3) is effected in the tempering device (1) by determining the mean temperatures of the tempering medium B and of the medium A to be tempered.

6. Method according to Claim 5, **characterized in that** the determining of the mean temperatures of the tempering medium B and of the medium A to be tempered is effected by measuring the temperatures of the tempering medium B and of the medium A to be tempered in each case upstream and downstream of the tempering device (1) or of the heat exchanger (2).

7. Method according to Claim 1 or 2, **characterized in that** the determining of the conveyed amount of the conveying device (3) is effected by detecting the operating state of the conveying device (3).

8. Method according to Claim 7, **characterized in that** the detecting of the operating state of the conveying device (3) is effected by means of opto-electronic or magnet-inductive components, in particular sensors.

9. Method according to Claim 7, **characterized in that** the detecting of the operating state of the conveying device (3) is effected by acquiring the instantaneous electric operating data of the conveying device (3).

10. Method according to one of Claims 1 to 9, **characterized in that** a signal is generated that is compatible with usual electronic heating cost distributors and corresponds to the consumption value determined.

11. Device for acquiring and evaluating temperature-dependent consumption values of a tempering device (1) that includes at least one heat exchanger (2) and one conveying device (3) for a medium A to be tempered, wherein the heat exchanger (2), on one hand, is traversed by a tempering medium B and, on the other hand, as a function of the conveying output of the conveying device (3), becomes penetrated or is penetrated by the medium A to be tempered, in particular for accomplishing the method according to one of Claims 1 to 10, **characterized in that** for acquiring the consumption values at least one sensor is provided in the tempering device (1) for determining the mean temperature of the tempering medium B or of the medium A to be tempered and one device is provided for determining the conveyed amount of the conveying device (3).

12. Device according to Claim 11, **characterized in that** for determining the mean temperature of the tempering medium B or of the medium A to be tempered, sensors are provided upstream and downstream of the tempering device (1) or of the heat exchanger (2) for measuring the respective temperatures of the tempering medium B or of the medium A to be tempered.

13. Device according to Claim 11 or 12, **characterized in that** an anemometer (9) is provided for determining the conveyed amount of the conveying device (3).

14. Device according to Claim 13, **characterized in that** a hydrometric vane, a hot-wire anemometer or the like is used as an anemometer (9).

15. Device according to Claim 11 or 12, **characterized in that** for determining the conveyed amount of the conveying device (3), sensors are provided in the tempering device (1) in each case for measuring the mean temperatures of the tempering medium B or of the medium A to be tempered.

16. Device according to Claim 15, **characterized in that** for determining the mean temperatures of the tempering medium B and of the medium A to be tempered, sensors are provided in each case upstream and downstream of the tempering device (1) of the heat exchanger (2) for measuring the temperatures of the tempering medium B and of the medium A to be tempered.

17. Device according to Claim 11 or 12, **characterized in that** a device for detecting the operating state of the conveying device (3) is provided for determining the conveyed amount of the conveying device (3).

18. Device according to Claim 17, **characterized in that** opto-electronic or magnet-inductive components, in particular sensors are provided for detecting the operating state of the conveying device (3).

19. Device according to Claim 17, **characterized in that** an evaluating device that acquires the instantaneous electric operating data of the conveying device (3) is provided for detecting the operating state of the conveying device (3).

20. Device according to one of Claims 11 to 19, **characterized in that** there is provided a converting device (13) which contains an output device (14) and generates a signal that is compatible with usual electronic heating cost distributors and corresponds to the consumption value determined.

## Revendications

1. Procédé d'acquisition et d'évaluation de valeurs de consommation dépendantes de la température d'un dispositif de thermorégulation (1) composé au moins d'un échangeur thermique (2) et d'un dispositif de transport (3) pour un milieu à thermoréguler A, l'échangeur thermique (2) étant, d'une part, balayé par un milieu thermorégulateur B et, d'autre part, traversé par le milieu à thermoréguler A en fonction du débit du dispositif de transport (3), **caractérisé en ce que** les valeurs de consommation sont acquises par la détermination de la température moyenne du milieu thermorégulateur B ou du milieu à thermoréguler A dans le dispositif de thermorégulation (1) et par la détermination du débit du dispositif de transport (3).

2. Procédé selon la revendication 1, **caractérisé en ce que** la détermination de la température moyenne du milieu thermorégulateur B ou du milieu à thermoréguler A est réalisée par mesure des températures respectives du milieu thermorégulateur B ou du milieu à thermoréguler A avant et après le dispositif de thermorégulation (1) ou l'échangeur thermique (2).

3. Procédé selon la revendication 1 ou 2, **caractérisé en ce que** la détermination du débit du dispositif de transport (3) est réalisée au moyen d'un anémomètre (9).

4. Procédé selon la revendication 3, **caractérisé en ce que** l'on utilise comme anémomètre (9) un anémomètre à ailettes, un anémomètre à fil chaud ou analogue.

5. Procédé selon la revendication 1 ou 2, **caractérisé en ce que** la détermination du débit du dispositif de transport (3) est réalisé par la détermination des températures moyennes du milieu thermorégulateur B et du milieu à thermoréguler A dans le dispositif de thermorégulation (1).

6. Procédé selon la revendication 5, **caractérisé en ce que** la détermination des températures moyennes du milieu thermorégulateur B et du milieu à thermoréguler A est réalisée par mesure des températures du milieu thermorégulateur B et du milieu à thermoréguler A dans chaque cas avant et après le dispositif de thermorégulation (1) ou l'échangeur thermique (2).

7. Procédé selon la revendication 1 ou 2, **caractérisé en ce que** la détermination du débit du dispositif de transport (3) est réalisée par acquisition de l'état de fonctionnement du dispositif de transport (3).

8. Procédé selon la revendication 7, **caractérisé en ce que** l'acquisition de l'état de fonctionnement du dispositif de transport (3) est réalisée au moyen de composants, en particulier de capteurs, optoélectroniques ou à induction magnétique.

9. Procédé selon la revendication 7, **caractérisé en ce que** l'acquisition de l'état de fonctionnement du dispositif de transport (3) est réalisée par l'acquisition des données de fonctionnement électriques momentanées du dispositif de transport (3).

10. Procédé selon une des revendications 1 à 9, **caractérisé en ce qu'**un signal correspondant à la valeur de consommation déterminée, compatible avec les répartiteurs électroniques de frais de chauffage courants, est généré.

11. Dispositif d'acquisition et d'évaluation de valeurs de consommation dépendantes de la température d'un dispositif de thermorégulation (1) composé au moins d'un échangeur thermique (2) et d'un dispositif de transport (3) pour un milieu à thermoréguler A, l'échangeur thermique (2) étant, d'une part, balayé par un milieu thermorégulateur B et, d'autre part, traversé par le milieu à thermoréguler A en fonction du débit du dispositif de transport (3), en particulier pour réaliser le procédé selon une des revendications 1 à 10, **caractérisé en ce qu'**au moins un capteur pour déterminer la température moyenne du milieu thermorégulateur B ou du milieu à thermoréguler A dans le dispositif de thermorégulation (1) ainsi qu'un dispositif pour déterminer le débit du dispositif de transport (3) sont prévus pour acquérir les valeurs de consommation.

12. Dispositif selon la revendication 11, **caractérisé en ce que** des capteurs pour mesurer les températures respectives du milieu thermorégulateur B ou du milieu à thermoréguler A avant et après le dispositif de thermorégulation (1) ou l'échangeur thermique (2) sont prévus pour déterminer la température moyenne du milieu thermorégulateur B ou du milieu à thermoréguler A.

13. Dispositif selon la revendication 11 ou 12, **caractérisé en ce qu'**un anémomètre (9) est prévu pour déterminer le débit du dispositif de transport (3).

14. Dispositif selon la revendication 13, **caractérisé en ce qu'**un anémomètre à ailettes, un anémomètre à fil chaud ou analogue est prévu comme anémomètre (9).

15. Dispositif selon la revendication 11 ou 12, **caractérisé en ce que** des capteurs pour mesurer les températures moyennes du milieu thermorégulateur B et du milieu à thermoréguler A sont prévus respectivement dans le dispositif de thermorégulation (1) pour déterminer le débit du dispositif de transport (3).

16. Dispositif selon la revendication 15, **caractérisé en ce que** des capteurs pour mesurer les températures du milieu thermorégulateur B et du milieu à thermoréguler A dans chaque cas avant et après le dispositif de thermorégulation (1) ou l'échangeur thermique (2) sont prévus pour déterminer les températures moyennes du milieu thermorégulateur B et du milieu à thermoréguler A.

17. Dispositif selon la revendication 11 ou 12, **caractérisé en ce qu'**un dispositif d'acquisition de l'état de fonctionnement du dispositif de transport (3) est prévu pour déterminer le débit du dispositif de transport (3).

18. Dispositif selon la revendication 17, **caractérisé en ce que** des composants, en particulier des capteurs, optoélectroniques ou à induction magnétique sont prévus pour acquérir l'état de fonctionnement du dispositif de transport (3).

19. Dispositif selon la revendication 17, **caractérisé en ce qu'**un dispositif d'évaluation acquérant les données de fonctionnement électriques momentanées du dispositif de transport (3) est prévu pour acquérir l'état de fonctionnement du dispositif de transport (3).

20. Dispositif selon une des revendications 11 à 19, **caractérisé en ce qu'**un dispositif de conversion (13) générant un signal correspondant à la valeur de consommation déterminée, compatible avec les répartiteurs électroniques de frais de chauffage courants, et contenant un dispositif de sortie (14) est prévu.
